(19) Europäisches Patentamt
European Patent Office
Office européen des brevets

(11) **EP 2 240 883 B1**

(12) **FASCICULE DE BREVET EUROPEEN**

(45) Date de publication et mention
de la délivrance du brevet:
**24.06.2015 Bulletin 2015/26**

(21) Numéro de dépôt: **09707053.6**

(22) Date de dépôt: **26.01.2009**

(51) Int Cl.:
**G06K 9/20** (2006.01)     **G06K 9/26** (2006.01)

(86) Numéro de dépôt international:
**PCT/FR2009/050107**

(87) Numéro de publication internationale:
**WO 2009/095602 (06.08.2009 Gazette 2009/32)**

(54) **SYSTÈME D'ACQUISITION D'IMAGES POUR L'IDENTIFICATION DE SIGNES SUR DES ENVOIS POSTAUX**

BILDAUFZEICHNUNGSSYSTEM FÜR ZEICHENIDENTIFIKATION AUF POSTSENDUNGEN

SYSTEM FOR ACQUIRING IMAGES FOR IDENTIFYING SIGNS ON POSTAL PACKAGES

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **01.02.2008 FR 0850640**

(43) Date de publication de la demande:
**20.10.2010 Bulletin 2010/42**

(73) Titulaire: **Solystic**
**92220 Bagneux (FR)**

(72) Inventeurs:
• **MITTE, Claude**
**F-95370 Montigny Les Cormeilles (FR)**
• **GUIGNARD, Céline**
**F-92130 Issy Les Moulineaux (FR)**

(74) Mandataire: **Prugneau, Philippe**
**Cabinet Prugneau-Schaub**
**3 avenue Doyen Louis Weil**
**Le Grenat - EUROPOLE**
**38000 Grenoble (FR)**

(56) Documents cités:
**WO-A-2007/022985     DE-A1- 1 423 606**
**FR-A- 2 895 820       US-A1- 2001 019 619**

## Description

L'invention concerne un système d'acquisition d'images pour l'identification de signes sur des envois postaux en mouvement.

L'invention concerne plus particulièrement un système d'acquisition d'images dans une machine de tri postal pour mettre en oeuvre une technique d'identification des envois postaux par signature d'image connue sous la marque « V-Id »™ et décrite par le document de brevet EP1519796 au nom de la société SOLYSTIC. Selon cette technique, il est possible d'identifier un envoi postal de façon univoque pendant les passes de tri successives du processus de tri sans imprimer de codes sur la surface de l'envoi. Plus particulièrement, lors d'une première passe de tri, l'image de chaque envoi est saisie par une caméra et des attributs extraits de cette image servent à construire une signature d'image pour cet envoi. Cette signature est enregistrée en mémoire en correspondance avec des informations de tri extraites classiquement par un traitement par reconnaissance optique de caractères (appelé « OCR ») et/ou de vidéo-codage. Lors d'une seconde passe de tri, une nouvelle image courante de l'envoi est saisie par la caméra et des attributs sont extraits de cette image courante pour construire une signature d'image courante pour l'envoi. La signature courante est comparée aux signatures enregistrées en mémoire pour récupérer, en cas de concordance de la signature courante avec une signature en mémoire, des informations de tri pour l'envoi. Il est primordial pour cette technique d'identification que les images successives saisies pour un même envoi soient sensiblement identiques. On comprend qu'un même traitement de construction de signature d'image appliqué sur deux images différentes aboutira avec une grande probabilité à deux résultats différents, et cela même si les deux images correspondent au même envoi.

Un système d'acquisition d'images pour une machine de tri postal est connu du document US 2001/0019619 A1. Dans un tel système, chaque envoi postal est déplacé par pincement entre un convoyeur et une paroi d'un boîtier dans laquelle est formée une fente longitudinale de telle sorte à faire apparaître les signes à identifier apposés sur une face de l'envoi dans la fente. Le système comprend dans le boîtier un module d'éclairage à deux unités d'éclairage symétriques par rapport à la fente qui éclairent la surface d'observation délimitée par la fente et une caméra disposée pour former une image de ladite surface éclairée.

On connaît aussi du document de brevet français FR-2 895 820 un système d'acquisition d'images tel que défini plus haut pour la reconnaissance d'information d'adresse sur des envois postaux. Avec ce système, on a constaté que pour des envois à enveloppes en plastique, des images successives prises pour un même envi, par exemple lors de la première passe de tri, puis lors de la seconde passe de tri, pouvaient présenter des différences telles qu'il n'est pas possible de mettre en oeuvre une technique d'identification par signatures d'image. Les différences de structures dans ces images successives sont dues en particulier à un phénomène de miroitement des faisceaux lumineux sur la surface en plastique des envois.

On connaît aussi du document de brevet WO2007/022 985 A1 un système d'acquisition d'images dans lequel le module d'éclairage est une barrette de LED (« Light Emitting Diode », diode électroluminescente) ou analogue disposée sur un seul côté longitudinal de la fente pour éclairer la surface délimitée par la fente avec un certain angle d'incidence orienté dans le sens de défilement des envois successifs devant la fente à l'extérieur du boîtier. Par ailleurs, des filtres optiques de polarisation croisés (c'est-à-dire avec leurs axes respectifs perpendiculaires l'un à l'autre) sont disposés d'une part entre la barrette de LED et la surface éclairée délimitée par la fente, et d'autre part entre la caméra et cette surface éclairée, afin de supprimer les effets de ce phénomène de miroitement. Mais dans ce système d'acquisition, on a constaté qu'un tel éclairage oblique fait ressortir l'hétérogénéité de surface de certains envois en faisant apparaître des ombres sur la surface éclairée des envois, notamment pour les envois à enveloppe en papier assez souple ou présentant des défauts mineurs (tels que des pliures, bosses, rabats, bande de soudure des plastiques, etc.). Il en résulte l'introduction d'un bruit à basse fréquence dans les images successives des envois. Avec ce système d'acquisition d'images, il n'est donc pas possible d'obtenir de manière reproductible des images d'envois divers qui ont une qualité suffisante pour utiliser une technique d'identification par signature d'image. Un autre système d'acquisition d'images conventionnel est divulgué par FR 2 761 178 A1.

Le but de l'invention est de fournir une section de machine de tri postal selon la revendication indépendante 1 qui ne présente pas les inconvénients indiqués ci-dessus et qui soit apte à fournir des images pour des envois à enveloppe en matière plastique ou en papier d'une qualité suffisante pour la mise en oeuvre d'une technique d'identification des envois par signature d'image.

Dans cet agencement, la paroi rigide transparente qui ferme la fente d'observation est affleurante par rapport à la paroi du boîtier contre laquelle est pincé à plat l'envoi ce qui empêche une déformation de la surface de l'envoi lorsqu'il se déplace sur la fente. Cet agencement contribue à saisir de manière reproductible des images successives identiques pour un même envoi, qu'il soit à enveloppe en matière plastique ou à enveloppe en papier, indépendamment de l'hétérogénéité de surface des envois (surface plane, lisse, avec relief ou avec pliure, abîmée...).

Selon l'invention, chaque unité d'éclairage est orientée vers ladite surface éclairée selon une direction d'incidence de l'éclairage respective avec un angle d'incidence compris dans un intervalle d'environ 10 degrés à 60 degrés et une distance respective entre chaque unité d'éclairage et ladite surface éclairée selon la direction d'incidence de l'éclairage comprise dans un intervalle d'environ 5 millimètres à 50 millimètres.

Avec de telles valeurs de l'angle d'incidence des unités d'éclairage et de la distance entre chaque unité d'éclairage et ladite surface éclairée, on obtient un éclairement symétrique optimal qui élimine le phénomène d'ombre, ce qui permet de saisir des images de la surface des envois de bonne qualité.

Le système d'acquisition d'images présente encore les particularités suivantes :

- chaque unité d'éclairage comprend au moins une barrette de diodes électroluminescentes dites « CMS » (Composant Monté en Surface) émettant une lumière blanche ;
- un espacement entre deux diodes électroluminescentes consécutives sur une barrette est compris dans un intervalle s'étendant de la largeur d'une telle diode électroluminescente jusqu'à 40 millimètres;
- une largeur de la fente est comprise dans un intervalle s'étendant entre environ 10 mm et 24 mm ;
- ladite paroi rigide transparente est réalisée en saphir ;
- le moyen optique de polarisation comprend un premier et un deuxième filtre optique de polarisation. Le premier filtre optique de polarisation est disposé entre la première unité d'éclairage et la surface éclairée et le deuxième filtre optique de polarisation est disposé entre la deuxième unité d'éclairage et la surface éclairée, des axes de polarisation respectifs des premiers et deuxièmes filtres optiques de polarisation étant respectivement perpendiculaires à un axe de polarisation du filtre optique de polarisation disposé entre la caméra et ladite surface éclairée ;
- un axe optique de ladite caméra est sensiblement perpendiculaire à la paroi rigide transparente ;
- il est prévu en outre deux colonnes de ventilation disposées de part et d'autre du module d'éclairage ;
- la caméra est une première caméra à multi-niveaux de gris et le système d'acquisition d'images selon l'invention comprend en outre une deuxième caméra couleur disposée avec un axe optique perpendiculaire à un axe optique de la première caméra et dans lequel un miroir est disposé de telle manière à permettre de réaliser des acquisitions d'images simultanées de ladite surface éclairée par les deux caméras ;
- le module d'éclairage comprend en outre deux autres unités d'éclairage disposées de manière symétrique de part et d'autre de la fente et de sorte à éclairer une bande centrale de ladite surface correspondant à une zone d'acquisition d'une caméra parmi la première et la deuxième caméras qui est la moins sensible.

L'invention s'étend à une machine de tri postal selon la revendication indépendante 12.

La section et la machine sont décrites plus en détail ci-après et illustrées par les dessins. Cette description n'est donnée qu'à titre d'exemple indicatif et nullement limitatif de l'invention.

La figure 1 est une vue partielle en perspective du système d'acquisition d'images inclus dans une section d'une machine de tri postal selon l'invention.
La figure 2 est une vue en perspective du système d'acquisition d'images de la figure 1, vu du côté opposé.
La figure 3 une vue en perspective du boîtier du système d'acquisition d'images.
La figure 4 est une vue très schématique de dessus en coupe du système d'acquisition d'images.
La figure 5 est une vue très schématique de dessus en coupe d'un mode de réalisation particulier du système d'acquisition d'images.
La figure 6 est une vue très schématique de dessus en coupe d'un autre mode de réalisation particulier du système d'acquisition d'images.

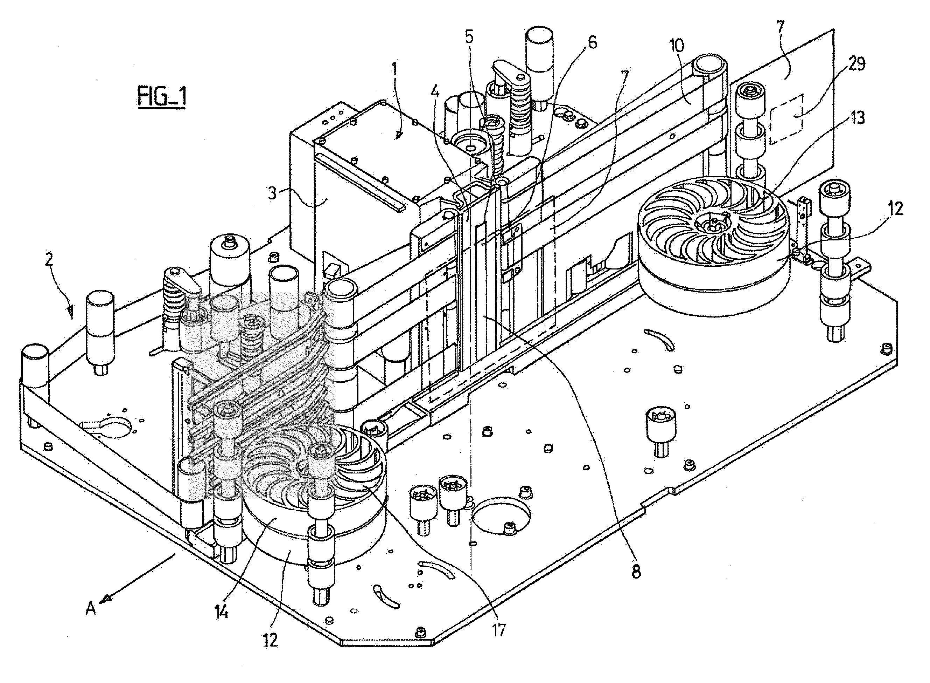

On a représenté sur la figure 1 un système d'acquisition d'images 1 intégré dans une section d'une machine de tri postal 2 selon l'invention. Pour des raisons de clarté, certains éléments de la section de machine de tri postal 2 ne sont pas représentés pour mieux laisser apparaître le système d'acquisition d'images 1.

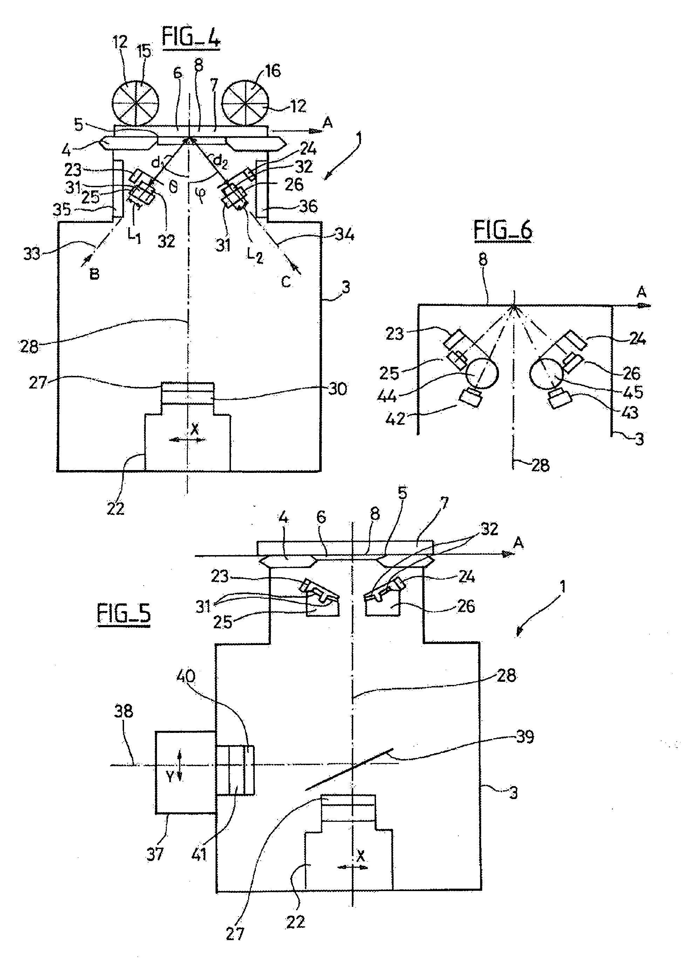

Le système d'acquisition d'images 1 comprend un boîtier 3 qui présente une paroi 4 munie d'une fente 5 fermée par une paroi rigide et transparente 6 devant laquelle sont convoyés des envois postaux 7 sur chant dans un sens de convoyage indiquée par la flèche A et de manière à présenter au système d'acquisition d'images 1 une surface à éclairer. Plus précisément, un module d'éclairage (décrit ci-après en correspondance avec la figure 4) permet d'éclairer, à travers la paroi rigide et transparente 6, une surface 8 délimitée par la fente 5, correspondant à une partie de la surface de l'envoi 7. On comprendra que la surface 8 correspond à la surface extérieure de la paroi rigide et transparente 6 par rapport au boîtier 3. La hauteur de la fente 5 est choisie de manière à ce que toute la hauteur des envois 7 soit éclairée. Ainsi, lorsque l'envoi 7 est convoyé devant la fente 5, on réalise progressivement une acquisition d'images de la surface complète de l'envoi 7. Sur la surface de l'envoi 7, on a représenté des signes 29 à identifier qui sont par exemple l'adresse de destination de l'envoi ou un code à barre en contraste et qui servent au tri automatique des envois 7.

La paroi rigide et transparente 6 est de préférence réalisée en matériau présentant des caractéristiques à la fois de transmission optique élevée et de résistance élevée à l'abrasion, tel que par exemple le saphir. En effet, un verre classique est détérioré par le passage des envois 7 à grande vitesse contre la paroi rigide et transparente 6 et nécessite d'être changé après le passage d'environ 1200000 envois. La haute résistance à l'abrasion du saphir permet au contraire d'utiliser la même paroi rigide et transparente 6 pendant toute la durée de vie du système d'acquisition d'images 1. Par ailleurs, la présence de filtres de polarisation comme décrit plus loin en référence aux figures 4 à 6 permet de s'affranchir de légères fluctuations de polarisation du rayonnement pouvant être observées à la sortie d'une paroi rigide et transparente 6 en saphir.

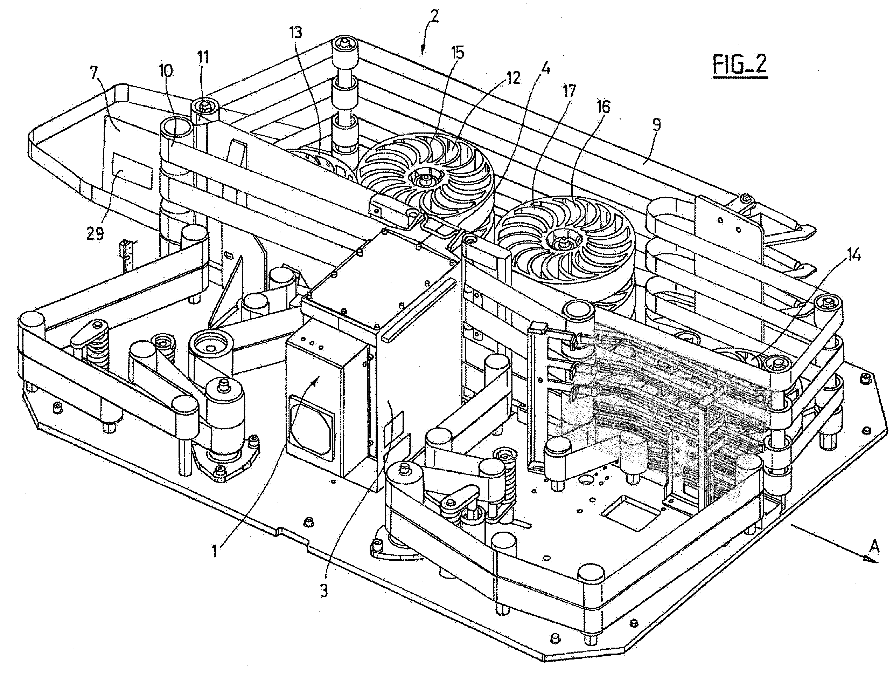

La figure 2 représente la section d'une machine de tri postal 2 de la figure 1, vue du côté opposé. La section de machine de tri postal 2 comprend un dispositif de convoyage à bandes 9 qui pince les envois 7 entre deux bandes opposées 10, 11 pour les convoyer dans le sens de convoyage A. Un dispositif de plaquage 12 composés de quatre roues 13,14,15,16 à ailettes en forme de croissant 17 en matière plastique élastiquement déformable et dont les axes respectifs sont fixes, plaque les envois 7 dans une direction perpendiculaire au sens de convoyage A. Les quatre roues 13,14,15,16 sont montées en étant espacées l'une de l'autre dans le sens de convoyage A, de part et d'autre de la fente 5 formée dans la paroi 4 du boîtier 3.

Dans un mode de réalisation particulier, deux roues 15,16 du dispositif de plaquage 12 sont positionnées en étant espacées d'une distance inférieure à la dimension d'un envoi 7 dans la direction indiquée par la flèche A, de manière à plaquer l'envoi 7 contre la paroi rigide et transparente 6. L'envoi 7 ainsi plaqué contre cette paroi se trouve sensiblement parallèle à la paroi rigide et transparente 6. Ainsi, la paroi rigide et transparente 6 limite la déformation de l'envoi 7 lors du passage de celui-ci dans la section de machine de tri postal 2, notamment dans le cas des envois souples en papier, ce qui permet d'obtenir des images de l'envoi 7 acquises par le système d'acquisition 1 sans défaut et reproductibles.

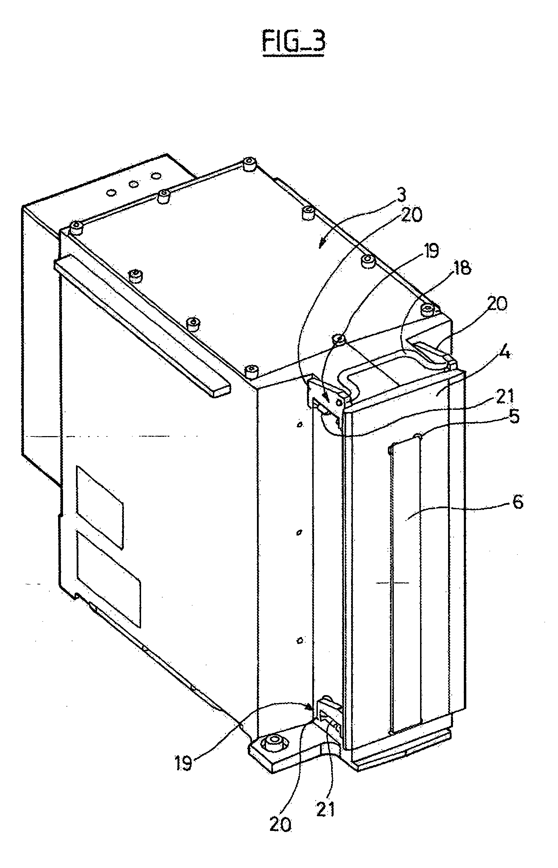

La figure 3 représente le boîtier 3 de forme sensiblement parallélépipédique avec la paroi 4 munie de la fente 5. Plus particulièrement, la paroi 4 comprend une paroi amovible munie d'une poignée 18 permettant de retirer la paroi 4 en la tirant vers le haut et quatre dispositifs de verrouillage 19 disposés respectivement en haut et en bas et de part et d'autre de la paroi amovible 4. Chaque dispositif de verrouillage 19 comprend un crochet 20 fixé en rotation sur la paroi amovible 4 et destiné à se bloquer sur un ergot 21 fixé sur le boîtier 3.

La figure 4 représente de manière schématique le système d'acquisition d'images 1 comprenant dans le boîtier 3 un module d'éclairage composé de deux unités d'éclairage 25,26 disposées pour éclairer avec un certain angle d'incidence oblique la surface 8 délimitée par la fente 5 et une caméra 22 disposée dans le boîtier 3 pour former une image de ladite surface 8.

Les deux unités d'éclairage 25,26 sont disposées de manière symétrique de part et d'autre de la fente 5 et à une distance de la surface 8 telle que définie ci-après, ce qui fournit un éclairage symétrique de la surface 8. En outre, les deux unités d'éclairage 25,26 sont sensiblement identiques, comme cela sera détaillé par la suite, ce qui assure un éclairement réparti de façon homogène sur toute la surface 8 et permet ainsi de réduire, voire d'éliminer, des ombres formées par un éclairage oblique sur des envois 7 souples, notamment en papier, ou présentant des défauts de surface tels que des pliures.

Dans un mode de réalisation particulier, la caméra 22 est disposée de manière à ce qu'un axe optique 28 de celle-ci soit sensiblement confondu avec une normale à la paroi rigide et transparente 6 et à la surface 8 éclairée. Ceci assure que toute la surface 8 est à une même distance de la caméra 22, ce qui évite la déformation des images saisies par la caméra 22 et facilite le traitement ultérieur de ces images. Par ailleurs, la fente 5 est de préférence centrée sur l'axe optique 28 et les deux unités d'éclairage 25,26 se trouvent donc disposées de manière symétrique par rapport à l'axe optique 28 de la caméra 22.

Les images acquises par la première caméra 22 sont transmises à un dispositif de traitement d'images (non-représenté) puis traitées par celui-ci, d'une manière classique pour le décodage des signes 29. Le traitement d'images pourrait être effectué par exemple par OCR pour le tri d'envois.

On a représenté sur la figure 4 un premier moyen optique de polarisation composé d'un premier et d'un deuxième filtre optique de polarisation 23,24 produisant une lumière polarisée linéairement et disposés respectivement entre les unités d'éclairage 25,26 et la surface 8 éclairée. Un troisième filtre optique de polarisation 27 linéaire est disposé entre la caméra 22 et la surface 8 éclairée. Les axes de polarisation respectifs des premier et deuxième filtres optiques de polarisation 23,24 sont croisés avec, ou perpendiculaires à, l'axe de polarisation du filtre de polarisation 27 disposé entre la caméra 22 et ladite surface 8 éclairée, c'est-à-dire qu'ils forment ensemble un angle d'environ 90°, ce qui permet de réduire, voire d'éliminer le phénomène de miroitement de surfaces plastiques. Le troisième filtre de polarisation 27 est avantageusement fixé sur une bague (non représentée) permettant un réglage en rotation de l'axe de polarisation de ce filtre de polarisation 27, afin d'atteindre aisément une position de croisement respectif des filtres de polarisation 23,24 avec le filtre de polarisation 27.

Des éléments optiques 30 supplémentaires, par exemple des lentilles, peuvent être ajoutés devant la caméra 22, et de préférence entre le troisième filtre de polarisation 27 et la caméra 22 comme représenté sur la figure 4, afin d'améliorer la qualité de l'image acquise par le système d'acquisition 1.

Dans un mode de réalisation particulier, chaque unité d'éclairage 25,26 comprend au moins une barrette 31 comprenant une pluralité de diodes électroluminescentes (LED) 32. Les barrettes 31 sont avantageusement arrangées longitudinalement dans la direction de la fente 5 (c'est-à-dire perpendiculaire au plan de la figure 4).

Des calculs et des essais ont permis de trouver une position optimale de chaque unité d'éclairage 25,26 par rapport à la surface 8 de sorte à obtenir un maximum d'éclairement de la surface 8 qui permette d'obtenir des images de qualité satisfaisante pour utiliser une technique d'identification par signature d'image, en fonction de caractéristiques géométriques des unités d'éclairage 25,26 et de la caméra 22, telle que la largeur de leurs zones d'acquisition respectives.

Plus précisément, on peut calculer une relation géométrique entre un angle d'incidence θ formé par un premier axe optique 33 définissant une première direction B d'incidence de l'éclairage de la première unité d'éclairage 25 avec l'axe optique 28 de la caméra 22 et une distance $d_1$ entre l'unité d'éclairage 25 et la surface 8 selon l'axe optique 33 ou la première direction B d'incidence de l'éclairage, comme indiqué sur la figure 4. La distance $d_1$ doit être comprise comme la distance, selon la première direction B d'incidence de l'éclairage, entre le milieu de la largeur de l'unité d'éclairage 25 (qui correspond au centre d'une diode électroluminescente) et l'intersection entre l'axe optique 28 et la surface 8, mesurée à une même hauteur sur l'unité d'éclairage 25 et la surface 8.

De la même façon, on peut calculer une relation identique entre un angle d'incidence φ formé par un deuxième axe optique 34 définissant une deuxième direction C d'incidence de l'éclairage de la deuxième unité d'éclairage 26 avec l'axe optique 28 de la caméra 22 et une distance $d_2$ entre l'unité d'éclairage 26 et la surface 8 selon l'axe optique 34 ou la deuxième direction C d'incidence de l'éclairage, de sorte que les deux unités d'éclairage 25,26 soient disposées de manière symétrique par rapport à l'axe optique 28 de la caméra 22. La distance $d_2$ doit être aussi comprise comme la distance selon la deuxième -direction C d'incidence de l'éclairage entre le milieu de la largeur de l'unité d'éclairage 26 et l'intersection entre l'axe optique 28 et la surface 8, mesurée à une même hauteur sur l'unité d'éclairage 26 et la surface 8.

On a trouvé qu'un maximum d'éclairement de la surface 8 est obtenu pour des angles θ,φ sensiblement identiques et égaux à 54,7° et une distance $d_{1,2}$ définie par la relation suivante :

$$d_{1,2} = \sqrt{\frac{3}{8}}\left(X + l_{1,2}\right),$$

où $l_{1,2}$ est la largeur respective de chaque unité d'éclairage 25,26 (c'est-à-dire approximativement la largeur de chaque barrette 31) et X la largeur de la zone d'acquisition de la première caméra 22.

En pratique, une position d'éclairement optimal, représentant environ 90% de l'éclairement maximal ci-dessus et satisfaisant pour obtenir des images de bonne qualité, est obtenue lorsque les deux conditions a) et b) ci-dessous sont réunies :

a) l'angle θ et l'angle φ tels que définis ci-dessus sont sensiblement égaux et compris dans un intervalle de 40 degrés à 55 degrés.

b) les distances $d_{1,2}$ telles que définies ci-dessus sont obtenus par les relations suivantes :

$$d_1 = \frac{X + l_1}{2\sin\theta}\quad,$$

$$d_2 = \frac{X + l_2}{2\sin\varphi}$$

La caméra 22 peut être une caméra à multi-niveaux de gris, par exemple un capteur à multi-niveaux de gris TDI (« Time Delay Integration », Intégration avec Retard) de 64 lignes dont la résolution est de 8 pixels par millimètre (px/mm) et qui nécessite une zone d'acquisition X large de 8 mm ou comprise dans un intervalle d'environ 8 à 10 mm. On pourra aussi choisir une caméra couleur, par exemple une caméra « Piranha Color » de la marque Dalsa, avec une résolution comprise par exemple entre 2 et 8 px/mm et nécessitant une zone d'acquisition comprise de manière générale dans un intervalle d'environ 1 à 5 mm. De manière générale, les LED de chaque unité d'éclairage 25,26 ont une largeur d'au moins 5 mm, et la largeur de chaque barrette 31 a une largeur $l_{1,2}$ comprise dans un intervalle d'environ 8 mm. Pour ces valeurs de la zone d'acquisition X et de la largeur $l_{1,2}$, la distance respective $d_{1,2}$ entre chaque unité d'éclairage 25,26 et la surface 8 est alors comprise dans un intervalle d'environ 5 à 11 mm lorsque les angles θ,φ sont sensiblement identiques et égaux à 54,7°. Lorsque les angles θ,φ varient dans l'intervalle précité de 40° à 55°, la distance $d_{1,2}$ varie dans un intervalle d'environ 5 à 14 mm (environ 9 à 14 mm pour une caméra à multi-niveaux de gris du type décrit ci-dessus et environ 5 à 11 mm pour une caméra couleur du type décrit ci-dessus).

De préférence, la fente 5 a une largeur choisie en fonction de la résolution de la caméra 22 et du module d'éclairage 25,26. Avec une caméra 22 de type TDI telle que définie ci-dessus et un module d'éclairage 25,26 tel que décrit plus haut, une largeur de la fente 5 adaptée est comprise entre 10 mm à 24 mm pour assurer notamment une intensité d'éclairement satisfaisante permettant de réaliser des images de qualité de la surface 8.

En pratique, il peut toutefois s'avérer pour des raisons d'encombrement mécanique, que les deux conditions a) et b) ci-dessus ne puissent pas être réunies, notamment lorsque les unités d'éclairage 25,26 comprennent chacune plusieurs barrettes 31 de diodes électroluminescentes 32 (comme représenté sur la figure 5). Un éclairement satisfaisant de ladite surface 8 peut être obtenu dans ce cas en choisissant des angles $\theta,\varphi$ pour chaque barrette 31 entre environ 10° et 60°, et de préférence entre environ 25° et 55° ; la distance respective $d_{1,2}$ sera alors modulée par rapport aux angles $\theta,\varphi$ pour optimiser l'éclairement de la surface 8, c'est-à-dire $d_{1,2}$ compris entre environ 5 mm et 50 mm, et de préférence entre environ 5 mm et 22 mm.

Les diodes électroluminescentes 32 seront avantageusement choisies parmi des diodes CMS (« Composants Montés en Surface ») émettant une lumière blanche, ce qui permet d'augmenter la puissance d'éclairage par rapport à des diodes électroluminescentes classiques. Les barrettes 31 de diodes électroluminescentes 32 sont sensiblement identiques entre elles en ce qu'elles comportent des diodes électroluminescentes 32 sensiblement identiques, le même nombre de diodes, le même espacement entre les diodes, etc.

En particulier, sur chacune des barrettes 31, les diodes électroluminescentes 32 sont espacées de façon à ce que leurs éclairements se recouvrent sur ladite surface éclairée 8, ce qui permet d'obtenir un éclairement homogène sur toute ladite surface 8, en particulier sur toute la hauteur de la surface 8 dans le sens de la fente 5.

Des essais ont montré qu'un espacement optimal (e) entre les centres respectifs de deux diodes électroluminescentes 32 consécutives sur une barrette 31 peut être évalué en fonction de caractéristiques de l'éclairage, à savoir : la distance $d_{1,2}$ telle que définie plus haut, l'angle d'émission $\alpha$ d'une diode électroluminescente, la largeur L d'une diode électroluminescente et la distance de recouvrement $d_{min}$ du rayonnement des diodes électroluminescentes 32 sur la surface 8, selon la relation suivante :

$$e = 2\left(d_{1,2} - d_{min}\right)\tan\left(\frac{\alpha}{2}\right) \text{ avec } e > l.$$

Ainsi, on trouve par exemple qu'un espacement optimal e entre des diodes électroluminescentes 32 ayant une largeur de 5 mm est compris dans un intervalle d'environ 5 à 7 mm, pour une distance $d_{1,2}$ comprise dans un intervalle d'environ 9 à 14 mm, une distance $d_{min}$ comprise dans un intervalle d'environ 2 à 7 mm et des diodes électroluminescentes 32 ayant un angle d'émission $\alpha$ d'environ 30°. Il va de soi que d'autres valeurs, notamment de l'angle d'émission $\alpha$ des diodes électroluminescentes 32, peuvent être utilisées sans s'éloigner de la portée de l'invention. Par exemple, pour des diodes électroluminescentes ayant un angle d'émission $\alpha$ d'environ 120° et les conditions ci-dessus pour $d_{1,2}$ et $d_{min}$, l'espacement optimal e entre les diodes électroluminescentes 32 est compris dans un intervalle d'environ 7 à 40 mm. De manière générale, l'espacement e optimal entre deux diodes électroluminescentes 32 consécutives est compris dans un intervalle d'environ L à 40 mm, où L est la largeur d'une telle diode électroluminescente.

Le nombre optimal de diodes électroluminescentes 32 nécessaires pour éclairer totalement la surface 8 est ajusté en fonction de la hauteur de la fente 5. Ainsi, des diodes électroluminescentes 32 à un angle d'émission $\alpha$ plus ouvert, tel que par exemple 70°, 110° ou 120°, peuvent être utilisées, ce qui permet de réduire le nombre de diodes nécessaires 32 pour éclairer toute la surface 8. On comprendra que chaque diode électroluminescente est disposée sur une barrette 31 de manière à ce que la surface émettrice de la diode électroluminescente soit parallèle à la barrette 31 et de manière à être orientée vers la surface 8.

Les propriétés optiques des filtres de polarisation 23,27,24 ne peuvent généralement pas être garanties pour des températures supérieures à 90°C. Un système de ventilation par extraction comprenant deux colonnes de ventilation 35,36 peut donc être disposé dans le boîtier 3 comme on le voit sur la figure 4, afin d'éviter toute instabilité due à un échauffement des filtre de polarisation 23,27,24. Le boîtier 3 clos par la paroi rigide et transparente 6 permet de créer une surpression qui facilite la mise en place du système de ventilation par extraction. Plus particulièrement, comme on peut le voir sur la figure 4, une colonne de ventilation 35, respectivement 36, est positionnée à côté de la première unité d'éclairage 25, respectivement la deuxième unité d'éclairage 26, assurant une extraction de chaleur homogène sur toute la hauteur de l'éclairage. La ventilation par extraction de chaleur est avantageuse car elle n'introduit pas de poussière dans le système d'acquisition d'images 1.

La figure 5 représente un mode de réalisation particulier dans lequel le système d'acquisition 1 comprend en outre une deuxième caméra 37 disposée de manière à saisir au moins une image de la surface éclairée 8. On a représenté ici deux barrettes 31 de diodes électroluminescentes 32 sur chaque unité d'éclairage 25,26. La première caméra 22 peut être par exemple une caméra à multi-niveaux de gris et la deuxième caméra 37 une caméra couleur. Avantageusement, selon l'invention, une deuxième caméra peut être prévue pour certaines applications particulières de la section de machine de tri 2, par exemple pour réaliser simultanément des traitements différents sur des images saisies par le système d'acquisition 1. On remplit ainsi à la fois le besoin d'une image de bonne qualité d'envois postaux en multi-niveaux de gris pour appliquer la technique d'identification par signature d'image et le besoin d'une image en couleur pour un traitement par vidéo-codage.

Un axe optique 38 de la deuxième caméra 37 est sensiblement perpendiculaire à l'axe optique 28 de la première caméra 22 sur une partie de la trajectoire du rayonnement entre la surface 8 et les caméras 22,37. Un miroir 39 est disposé de manière à permettre de réaliser des acquisitions d'images simultanées de la surface éclairée 8 par les deux caméras 22,37. Le miroir 39 peut être un miroir semi-réfléchissant séparateur disposée entre la surface 8 éclairée et la première caméra 22 de manière à laisser passer une première partie du rayonnement émis par les unités d'éclairage 25,26 et réfléchi par la surface 8 en direction de la première caméra 22, et à dévier une deuxième partie de ce rayonnement en direction de la deuxième caméra 37, d'une manière classique, ce qui permet aux deux caméras 22,37 de saisir simultanément des images d'un même envoi 7.

Dans un mode de réalisation particulier, la première caméra 22 est un capteur à multi-niveaux de gris TDI de 64 lignes et de 8 px/mm de résolution, avec une zone d'acquisition X large de 10 mm, alors que la deuxième caméra 37 couleur est un capteur linéaire dont la résolution est de 1 px/mm et qui requiert une zone d'acquisition Y large de 2 mm. Un quatrième filtre optique de polarisation 40 est disposé entre la deuxième caméra 37 et la surface 8 de manière à ce qu'un axe de polarisation du quatrième filtre de polarisation 40 soit perpendiculaire à, ou croisé avec, chacun des axes de polarisation des premier et deuxième filtres de polarisation 23,24, ce qui a pour effet de réduire l'effet de miroitement de surfaces notamment en plastique. D'autres éléments optiques 41 supplémentaires peuvent être ajoutés devant la deuxième caméra 37, et de préférence entre le filtre de polarisation 40 et la caméra 37 comme indiqué sur la figure 5, pour améliorer encore la qualité de l'image acquise par le système d'acquisition 1.

La figure 6 représente un autre mode de réalisation particulier de l'invention comprenant une troisième et une quatrième unité d'éclairage 42,43, de préférence sensiblement identiques entre elles, disposées de manière à éclairer la surface 8. Les troisième et quatrième unités d'éclairage 42,43 sont positionnées de part et d'autre de la fente 5 et de manière à diriger leur éclairage sur la surface 8, ici à travers les premier et deuxième filtres optiques de polarisations 23,24. On a représenté ici une barrette 31 de diodes électroluminescentes 32 pour chaque unité d'éclairage 25,26,42,43. Chaque unité d'éclairage 42,43 peut aussi être composée de plusieurs barrettes 31 de diodes électroluminescentes 32 non représentées, de manière similaire aux unités d'éclairage 25,26 décrites précédemment.

Les troisième et quatrième unités d'éclairage 42,43 permettent d'améliorer l'éclairage sur la surface 8, notamment en répartissant l'éclairage sur la surface 8 dans la direction de la flèche A en fonction de la sensibilité différente des caméras 22,37. Par exemple, on pourra augmenter l'intensité d'éclairement sur une bande centrale de la surface 8 éclairée correspondant à la zone d'acquisition X,Y de la caméra la moins sensible et présentant une zone d'acquisition étroite. Dans l'exemple décrit ci-dessus, par exemple, la caméra 37 couleur est moins sensible que la caméra 22 à multi-niveau de gris. Deux éléments optiques 44,45 tels que par exemple des lentilles peuvent être positionnés respectivement devant les troisième et quatrième unités d'éclairage 42,43, et de préférence entre les unités d'éclairage 42,43 et les filtres de polarisation respectifs 23,24 comme indiqué sur la figure 6, de façon à focaliser le rayonnement des unités d'éclairage 42, 43 sur une bande centrale de la surface 8. Ainsi, les deux caméras 22,37 n'ayant pas la même sensibilité peuvent quand même saisir simultanément des images de qualité satisfaisante pour utiliser ultérieurement une technique d'identification par signature d'image.

## Revendications

1. Section de machine de tri postal d'envois postaux (7) comprenant un dispositif de convoyage (9) des envois postaux (7) constitué par des roues (15,16) élastiquement déformables et un système d'acquisition d'images (1) pour l'identification de signes sur des envois postaux (7) dans laquelle chaque envoi postal est déplacé par pincement entre ledit dispositif de convoyage et une paroi (4) d'un boîtier (3) dans laquelle est formée une fente longitudinale (5) de telle sorte à faire apparaître les signes à identifier apposés sur une face de l'envoi dans la fente de la paroi du boîtier, le système d'acquisition d'images comprenant dans le boîtier un module d'éclairage (25,26) éclairant une surface (8) délimitée par la fente longitudinale, une caméra (22) disposée pour former une image de ladite surface (8) éclairée, un moyen optique de polarisation (23,24) disposé entre ledit module d'éclairage (25,26) et ladite surface (8) éclairée et un filtre optique de polarisation (27) disposé entre ladite caméra (22) et ladite surface (8) éclairée, **caractérisé en ce que** ledit module d'éclairage (25,26) comprend deux unités d'éclairage (25,26) sensiblement identiques disposées de manière symétrique de part et d'autre de la fente (5), **en ce que** ladite fente (5) est fermée par une paroi rigide transparente affleurante (6) contre laquelle chaque envoi (7) est plaqué par les roues élastiquement déformables (15,16) disposées de part et d'autre de ladite fente longitudinale (5) de sorte que la surface (8) éclairée opposée à la surface extérieure de ladite paroi rigide transparente affleurante (6) par rapport audit boîtier (3) limite la déformation de l'envoi lors de son passage devant ladite fente (5).

**2.** Section de machine de tri postal selon la revendication 1, dans laquelle chaque unité d'éclairage (25,26) est orientée vers ladite surface (8) éclairée selon une direction d'incidence de l'éclairage (B,C) respective avec un angle d'incidence ($\theta,\varphi$) compris dans un intervalle d'environ 10 degrés à 60 degrés et une distance ($d_{1,2}$) respective entre chaque unité d'éclairage (25,26) et ladite surface (8) éclairée selon la direction d'incidence de l'éclairage (B,C) comprise dans un intervalle d'environ 5 millimètres à 50 millimètres.

**3.** Section de machine de tri postal selon la revendication 1 ou 2, dans laquelle chaque unité d'éclairage (25,26) comprend au moins une barrette (31) de diodes électroluminescentes (32) dites CMS ou Composant Monté en Surface émettant une lumière blanche.

**4.** Section de machine de tri postal selon la revendication 3, dans laquelle un espacement entre deux diodes électroluminescentes (32) consécutives sur une barrette (31) est compris dans un intervalle s'étendant de la largeur d'une telle diode électroluminescente jusqu'à 40 millimètres.

**5.** Section de machine de tri postal selon l'une des revendications précédentes, dans laquelle une largeur de la fente (5) est comprise dans un intervalle s'étendant entre environ 10 mm et 24 mm.

**6.** Section de machine de tri postal selon l'une des revendications précédentes, dans laquelle ladite paroi rigide transparente (6) est réalisée en saphir.

**7.** Section de machine de tri postal selon l'une des revendications précédentes, dans laquelle le moyen optique de polarisation comprend un premier et un deuxième filtre optique de polarisation (23,24), le premier filtre optique de polarisation (23) étant disposé entre la première unité d'éclairage (25) et la surface (8) éclairée et le deuxième filtre optique de polarisation (24) étant disposé entre la deuxième unité d'éclairage (26) et la surface (8) éclairée, des axes de polarisation respectifs des premiers et deuxièmes filtres optiques de polarisation (23,24) étant respectivement perpendiculaires à un axe de polarisation du filtre optique de polarisation (27) disposé entre la caméra (22) et ladite surface (8) éclairée.

**8.** Section de machine de tri postal selon l'une des revendications précédentes, dans laquelle un axe optique (28) de ladite caméra (22) est sensiblement perpendiculaire à la paroi rigide transparente (6).

**9.** Section de machine de tri postal selon l'une des revendications précédentes, comprenant en outre deux colonnes de ventilation (35,36) disposées de part et d'autre du module d'éclairage (25,26).

**10.** Section de machine de tri postal selon l'une des revendications précédentes, dans laquelle la caméra (22) est une première caméra à multi-niveaux de gris, le système comprenant en outre une deuxième caméra (37) couleur disposée avec un axe optique (38) perpendiculaire à un axe optique (28) de la première caméra (22) et dans lequel un miroir (39) est disposé de telle manière à permettre de réaliser des acquisitions d'images simultanées de ladite surface (8) éclairée par les deux caméras (22,37).

**11.** Section de machine de tri postal selon la revendication 10, dans laquelle le module d'éclairage comprend en outre deux autres unités d'éclairage (42,43) disposées de manière symétrique de part et d'autre de la fente (5) et de sorte à éclairer une bande centrale de ladite surface (8) correspondant à une zone d'acquisition (X,Y) d'une caméra parmi la première et la deuxième caméras (22,37) qui est la moins sensible.

**12.** Machine de tri postal comprenant une section de machine de tri postal d'envois postaux (7) comprenant un dispositif de convoyage (9), selon l'une des X revendications précédentes.

**Patentansprüche**

**1.** Abschnitt einer Postsortiermaschine für Postsendungen (7), welcher eine Fördervorrichtung (9) für Postsendungen (7), die aus elastisch verformbaren Rädern (15, 16) besteht, und ein Bilderfassungssystem (1) zur Identifizierung von Zeichen auf Postsendungen (7) umfasst, und in welchem jede Postsendung durch Festklemmen zwischen der Fördervorrichtung und einer Wand (4) eines Gehäuses (3) fortbewegt wird, in welcher ein Längsschlitz (5) ausgebildet ist, derart, dass bewirkt wird, dass die zu identifizierenden Zeichen, die auf einer Seite der Sendung angebracht sind, in dem Spalt der Wand des Gehäuses erscheinen, wobei das Bilderfassungssystem (1) in dem Gehäuse ein Beleuchtungsmodul (25, 26), das eine von dem Längsschlitz (5) begrenzte Fläche (8) beleuchtet, eine Kamera (22), die so angeordnet ist, dass sie ein Bild der beleuchteten Fläche (8) aufnehmen kann, ein optisches Polarisationsmittel (23, 24), das zwischen dem Beleuchtungsmodul (25, 26) und der beleuchteten Fläche (8) angeordnet ist, und ein optisches Polarisationsfilter (27), das zwischen der Kamera (22) und der beleuchteten Fläche (8) angeordnet ist, umfasst, **dadurch gekennzeichnet, dass** das Beleuchtungsmodul (25, 26) zwei im Wesentlichen identische Beleuchtungseinheiten (25, 26) umfasst, die symmetrisch beiderseits des Schlitzes (5) angeordnet sind, und dadurch, dass der Schlitz (5) durch eine anliegende durchsichtige starre Wand (6) verschlossen ist, an die jede Sendung (7) durch die elastisch verformbaren Räder (15, 16) angedrückt wird, die beiderseits des Längsschlitzes (5) angeordnet sind, derart, dass die beleuchtete Fläche (8), die der bezüglich des Gehäuses (3) äußeren Fläche der anliegenden durchsichtigen starren Wand (6) gegenüberliegt, die Verformung der Sendung bei ihrem Durchlauf vor dem Schlitz (5) begrenzt.

2. Abschnitt einer Postsortiermaschine nach Anspruch 1, wobei jede Beleuchtungseinheit (25, 26) auf die beleuchtete Fläche (8) in einer Einfallsrichtung der Beleuchtung (B, C) mit jeweils einem Einfallswinkel ($\theta$, $\varphi$) ausgerichtet ist, der in einem Intervall von ungefähr 10 Grad bis 60 Grad liegt, und ein jeweiliger Abstand ($d_{1,2}$) zwischen jeder Beleuchtungseinheit (25, 26) und der beleuchteten Fläche (8) in der Einfallsrichtung der Beleuchtung (B, C) in einem Intervall von ungefähr 5 Millimetern bis 50 Millimeter liegt.

3. Abschnitt einer Postsortiermaschine nach Anspruch 1 oder 2, wobei jede Beleuchtungseinheit (25, 26) wenigstens eine Anordnung (31) von Leuchtdioden (32), die als CMS oder oberflächenmontierte Bauelemente ausgeführt sind und ein weißes Licht aussenden, umfasst.

4. Abschnitt einer Postsortiermaschine nach Anspruch 3, wobei ein Zwischenraum zwischen zwei aufeinander folgenden Leuchtdioden (32) einer Anordnung (31) in einem Intervall liegt, das sich von der Breite einer solchen Leuchtdiode bis 40 Millimeter erstreckt.

5. Abschnitt einer Postsortiermaschine nach einem der vorhergehenden Ansprüche, wobei eine Breite des Schlitzes (5) in einem Intervall liegt, das sich zwischen ungefähr 10 mm und 24 mm erstreckt.

6. Abschnitt einer Postsortiermaschine nach einem der vorhergehenden Ansprüche, wobei die durchsichtige starre Wand (6) aus Saphir hergestellt ist.

7. Abschnitt einer Postsortiermaschine nach einem der vorhergehenden Ansprüche, wobei das optische Polarisationsmittel ein erstes und ein zweites optisches Polarisationsfilter (23, 24) umfasst, wobei das erste optische Polarisationsfilter (23) zwischen der ersten Beleuchtungseinheit (25) und der beleuchteten Fläche (8) angeordnet ist und das zweite optische Polarisationsfilter (24) zwischen der zweiten Beleuchtungseinheit (26) und der beleuchteten Fläche (8) angeordnet ist, wobei jeweilige Polarisationsachsen des ersten und des zweiten optischen Polarisationsfilters (23, 24) jeweils senkrecht zu einer Polarisationsachse des optischen Polarisationsfilters (27) sind, das zwischen der Kamera (22) und der beleuchteten Fläche (8) angeordnet ist.

8. Abschnitt einer Postsortiermaschine nach einem der vorhergehenden Ansprüche, wobei eine optische Achse (28) der Kamera (22) etwa senkrecht zu der durchsichtigen starren Wand (6) ist.

9. Abschnitt einer Postsortiermaschine nach einem der vorhergehenden Ansprüche, welcher außerdem zwei Ventilationssäulen (35, 36) umfasst, die beiderseits des Beleuchtungsmoduls (25, 26) angeordnet sind.

10. Abschnitt einer Postsortiermaschine nach einem der vorhergehenden Ansprüche, wobei die Kamera (22) eine erste Kamera für Multi-Graustufen ist, wobei das System außerdem eine zweite Kamera (37) für Farben umfasst, die mit einer zu einer optischen Achse (28) der ersten Kamera (22) senkrechten optischen Achse (38) angeordnet ist, und wobei ein Spiegel (39) derart angeordnet ist, dass er ermöglicht, gleichzeitige Erfassungen von Bildern der beleuchteten Fläche (8) durch die zwei Kameras (22, 37) zu realisieren.

11. Abschnitt einer Postsortiermaschine nach Anspruch 10, wobei das Beleuchtungsmodul außerdem zwei weitere Beleuchtungseinheiten (42, 43) umfasst, die symmetrisch beiderseits des Schlitzes (5) angeordnet sind, und derart, dass sie einen mittleren Streifen der Fläche (8) beleuchten, der einem Erfassungsbereich (X, Y) derjenigen Kamera von der ersten und der zweiten Kamera (22, 37) entspricht, welche die weniger empfindliche ist.

12. Postsortiermaschine, die einen Abschnitt einer Postsortiermaschine für Postsendungen (7) nach einem der vorhergehenden Ansprüche umfasst, welcher eine Fördervorrichtung (9) umfasst.

**Claims**

1. A section of a postal sorting machine for sorting mailpieces (7) comprising a mailpieces (7) conveyor device (9) comprising elastically deformable wheels (15,16) and an image acquisition system (1) for identifying signs on mailpieces (7) wherein each mailpiece is moved by being nipped between said conveyor device and a wall (4) of a housing (3) in which wall a longitudinal slot (5) is formed in a manner such that the signs to be identified that are placed on a face of the mailpiece are caused to appear in the slot in the wall of the housing, the image acquisition system comprising, inside the housing, an illumination module (25,26) that illuminate a surface (8) limited by the longitudinal slot, a camera (22) disposed to form an image of said illuminated surface (8), a polarization optical means (23,24) disposed between said illumination module (25,26) and said illuminated surface (8) and a polarization optical filter (27) disposed between said camera (22) and said illuminated surface (8), **characterized in that** said illumination module (25,26) comprises two lighting units that are substantially identical, that are disposed symmetrically on either side of the slot (5), **in that** said slot (5) is closed by a transparent and rigid flushed wall (6) against which each mailpiece (7) is pressed by the elastically deformable wheels (15,16) disposed on either side of said longitudinal slot (5), such as the illuminated surface (8) opposed to the outside surface of said rigid and transparent flushed wall (6) related to said housing (3) limits deformation of the piece while it passes in front of said slot (5).

2. A section of a postal sorting machine according to claim 1, wherein each lighting unit (25,26) is directed towards said illuminated surface (8) in a respective illumination incidence direction (B,C) with an angle of incidence $(\theta,\varphi)$ lying in the range of about 10° to about 60°, and a respective distance $(d_{1,2})$ between each lighting unit (25,26) and said illuminated surface (8) in the illumination incidence direction (B,C) that lies in the range of about 5 mm to about 50 mm.

3. A section of a postal sorting machine according to claim 1 or claim 2, wherein each lighting unit (25,26) comprises at least one strip (31) of LEDs (32) called SMC or Surface Mount Component that emit white light.

4. A section of a postal sorting machine according to claim 3, wherein a pitch of consecutive LEDs (32) on a strip (31) lies in the range of about the width of such an LED to about 40 mm.

5. A section of a postal sorting machine according to any preceding claim, wherein the slot (5) is of a width that lies in the range of about 10 mm to about 24 mm.

6. A section of a postal sorting machine according to any one of the preceding claim, wherein said transparent rigid wall (6) is made of sapphire.

7. A section of a postal sorting machine according to any preceding claim, wherein the polarization optical means comprise first and second polarization optical filters (23,24), the first polarization optical filter (23) being disposed between the first lighting unit (25) and the illuminated surface (8), and the second polarization optical filter (24) being disposed between the second lighting unit (26) and the illuminated surface (8), respective polarization axes of the first and second polarization optical filters (23,24) being perpendicular to a polarization axis (27) of the polarization optical filter disposed between the camera (22) and said illuminated surface (8).

8. A section of a postal sorting machine according to any preceding claim, wherein an optical axis (28) of said camera (22) is substantially perpendicular to the transparent rigid wall (6).

9. A section of a postal sorting machine according to any one of the preceding claim, further comprising two ventilation columns (35,36) disposed on either side of the illumination module (25,26).

10. A section of a postal sorting machine according to any preceding claim, wherein the camera (22) is a multiple-level gray scale first camera, the system further comprising a color second camera (37) disposed with an optical axis (38) perpendicular to an optical axis (28) of the first camera (22), and wherein a mirror (39) is disposed in such a manner as to enable images of said illuminated surface (8) to be acquired simultaneously by the first and second cameras (22,37).

11. A section of a postal sorting machine according to claim 10, wherein the illumination module further comprises two other lighting units (42,43) disposed symmetrically on either side of the slot (5) and in a manner such as to illuminate a central strip of said surface (8) corresponding to an acquisition zone (X,Y) of a less sensitive one of the first and second cameras (22,37).

**12.** A postal sorting machine having a section of a postal sorting machine for sorting mailpieces (7) comprising a conveyor device (9), according to any preceding claim.

FIG_1

EP 2 240 883 B1

FIG_2

## FIG_3

FIG_4

FIG_6

FIG_5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1519796 A
- US 20010019619 A1
- FR 2895820
- WO 2007022985 A1
- FR 2761178 A1